(19) Europäisches Patentamt
European Patent Office
Office européen des brevets

(11) **EP 2 034 606 B1**

(12) **EUROPÄISCHE PATENTSCHRIFT**

(45) Veröffentlichungstag und Bekanntmachung des Hinweises auf die Patenterteilung:
**11.03.2015 Patentblatt 2015/11**

(51) Int Cl.:
*H02M 7/487* (2007.01)   *H02P 21/12* (2006.01)
*H02P 27/14* (2006.01)   *H02P 21/00* (2006.01)
*H02P 23/00* (2006.01)

(21) Anmeldenummer: **07116035.2**

(22) Anmeldetag: **10.09.2007**

(54) **Verfahren zum Betrieb einer rotierenden elektrischen Maschine**

Method for operating an electric rotary machine

Procédé destiné au fonctionnement d'une machine électrique rotative

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**11.03.2009 Patentblatt 2009/11**

(73) Patentinhaber: **ABB Research Ltd.**
**8050 Zürich (CH)**

(72) Erfinder:
• **Kley, Jonas**
  **8400 Winterthur (CH)**
• **Papafotiou, Georgios**
  **8134 Adliswil (CH)**

(74) Vertreter: **ABB Patent Attorneys**
**c/o ABB Schweiz AG**
**Intellectual Property CH-IP**
**Brown Boveri Strasse 6**
**5400 Baden (CH)**

(56) Entgegenhaltungen:
**EP-A- 0 812 059     EP-A- 1 670 135**
**FR-A- 2 791 488**

• TAN Z ET AL: "A DIRECT TORQUE CONTROL OF INDUCTION MOTOR BASED ON THREE-LEVEL NPC INVERTER" 32ND.ANNUAL IEEE POWER ELECTRONICS SPECIALISTS CONFERENCE. PESC 2001. CONFERENCE PROCEEDINGS. VANCOUVER, CANADA, JUNE 17 - 21, 2001, ANNUAL POWER ELECTRONICS SPECIALISTS CONFERENCE, NEW YORK, NY : IEEE, US, Bd. VOL. 3 OF 4. CONF. 32, 17. Juni 2001 (2001-06-17), Seiten 1435-1439, XP001054272 ISBN: 0-7803-7067-8

## Beschreibung

## Technisches Gebiet

Die Erfindung bezieht sich auf das Gebiet der Betriebsverfahren rotierender elektrischer Maschinen. Sie geht aus von einem Verfahren zum Betrieb einer rotierenden elektrischen Maschine gemäss den unabhängigen Ansprüchen.

## Stand der Technik

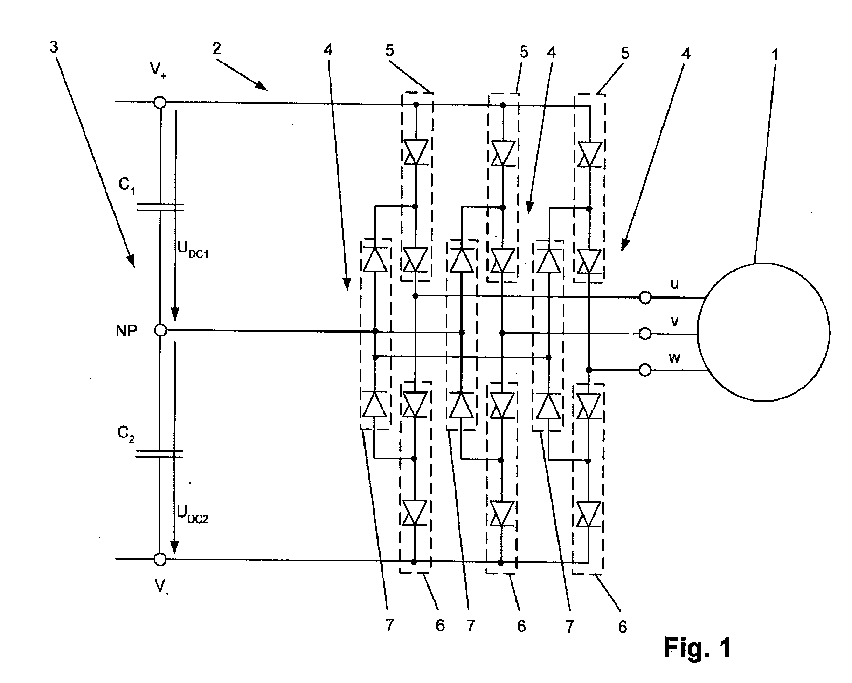

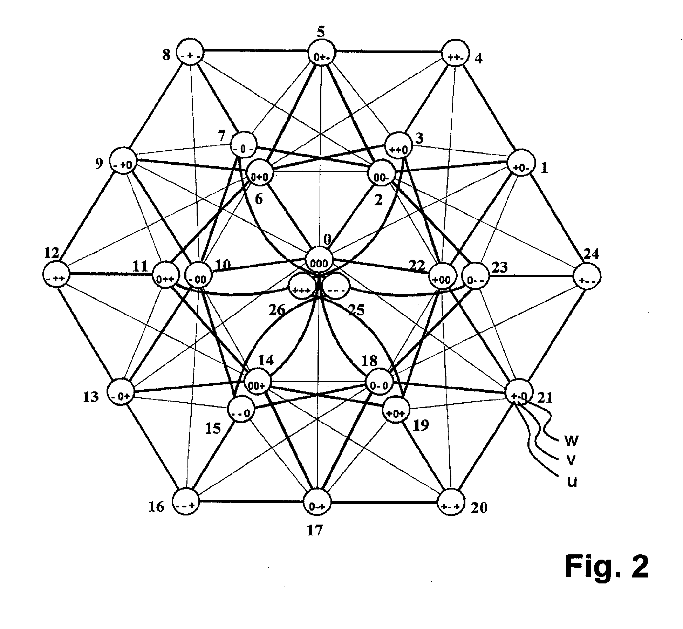

Heute werden in vielen Anwendungen Hochleistungsspannungsumrichterschaltungen eingesetzt. Eine solche Umrichterschaltung schaltet gängigerweise drei Spannungsniveaus und wird häufig zum Betrieb von rotierenden elektrischen Maschinen, insbesondere in Synchron- und Asynchronmaschinen, eingesetzt, welche rotierenden elektrischen Maschinen üblicherweise drei Statorwicklungen aufweisen. Bei einem gängigen Verfahren zum Betrieb einer rotierenden elektrischen Maschine ist diese phasenmässig mit einer solchen einen Gleichspannungskreis aufweisenden Umrichterschaltung zur Schaltung von allgemein m Spannungsniveaus verbunden, wobei m ≥ 2 ist. Der Gleichspannungskreis ist bei einer Umrichterschaltung zur Schaltung von typischerweise drei Spannungsniveaus durch einen ersten Kondensator und durch einen in Serie zum ersten Kondensator geschalteten zweiten Kondensator gebildet, wobei der Gleichspannungskreis zudem am ersten Kondensator einen ersten Hauptanschluss, am zweiten Kondensator einen zweiten Hauptanschluss und einen durch die zwei seriell verbundenen Kondensatoren gebildeten Teilanschluss aufweist. Weiterhin umfasst die Umrichterschaltung zur Schaltung von drei Spannungsniveaus Leistungshalbleiterschalter, welche in üblicher Weise verschaltet sind. In Fig. 1 ist dazu eine Ausführungsform einer gängigen dreiphasigen Umrichterschaltung zur Schaltung von drei Spannungsniveaus gezeigt. Verfahrensmässig werden die Phasen der Umrichterschaltung allgemein mit dem Gleichspannungskreis nach einer ausgewählten Schaltzustandskombination von Schaltzuständen der Leistungshalbleiterschalter der Umrichterschaltung verbunden. Bei einer Umrichterschaltung zur Schaltung von drei Spannungsniveaus werden die Phasen der Umrichterschaltung demgemäss mit dem ersten Hauptanschluss, mit dem zweiten Hauptanschluss oder mit dem Teilanschluss nach einer ausgewählten Schaltzustandskombination von Schaltzuständen der Leistungshalbleiterschalter der Umrichterschaltung verbunden. In einem in Fig. 2 gezeigten Zustandsdiagramm sind diese Schaltzustandkombinationen und deren Übergänge zueinander gezeigt, wobei die "+" für eine Verbindung der entsprechenden Phase mit dem ersten Hauptanschluss, "-" für eine Verbindung der entsprechenden Phase mit dem zweiten Hauptanschluss und "0" für eine Verbindung der entsprechenden Phase mit dem Teilanschluss steht.

Die Auswahl der entsprechenden Schaltzustandkombinationen erfolgt beispielsweise nach der bekannten "Direkten Drehmomentregelung " (DTC - Direct Torque Control), bei der der aktuelle Istwert des Drehmoments der rotierenden elektrischen Maschine, des magnetischen Statorflusses der rotierenden elektrischen Maschine und des Potentials am Teilanschluss zunächst jeweils mit einem zugehörigen vorgegebenen Wertebereich verglichen werden. Der jeweils vorgegebene Wertebereich ist oder kann zeitvariant sein und wird gängigerweise durch einen übergeordneten Regelkreis aus Referenzwerten des Drehmoments der rotierenden elektrischen Maschine, des magnetischen Statorflusses der rotierenden elektrischen Maschine und des Potentials am Teilanschluss bestimmt. Überschreitet nun ein aktueller Istwert seinen zugehörigen vorgegebenen Wertebereich, so wird eine Schaltzustandskombination in Abhängigkeit der vorangehenden ausgewählten Schaltzustandskombination aus einer Tabelle ausgewählt, so dass der sich zu dieser Schaltzustandskombination ergebende aktuelle Wert allenfalls wieder innerhalb des zugehörigen Wertebereichs liegen könnte, wobei es dafür keine Garantie gibt. Zudem wird eine Schaltzustandskombination immer nur entweder bezüglich des aktuellen Istwertes des Drehmoments, des magnetischen Statorflusses oder des Potentials bei Überschreiten des zugehörigen Wertebereichs ausgewählt. Eine gemeinsame Betrachtung des aktuellen Istwertes des Drehmoments, des magnetischen Statorflusses und des Potentials findet nicht statt.

Problematisch bei einem vorstehend beschriebenen Verfahren zum Betrieb einer rotierenden elektrischen Maschine mittels der bekannten "Direkten Drehmomentregelung " ist, dass zwischen der vorangehenden ausgewählten Schaltzustandskombination und der aktuell ausgewählten Schaltzustandskombination typischerweise mehrere Übergänge vorliegen, welche in Fig. 2 als Linien zwischen den Schaltzustandskombinationen dargestellt sind. Die Schaltzustandskombinationen und die Übergänge von einer Schaltzustandskombination zu einer anderen sind allgemein fix in der Tabelle abgelegt, wobei typischerweise nicht sämtliche Kombinationsmöglichkeiten von Schaltzustandskombination gemäss Fig. 2 in der Tabelle abgelegt sind. Weiterhin wird bei der "Direkten Drehmomentregelung " nur eine Schaltzustandskombination in Abhängigkeit der vorangehenden ausgewählten Schaltzustandskombination mit den zugehörigen Übergängen ausgewählt, welche in der Tabelle abgelegt ist und welche den zur ausgewählten Schaltzustandskombination ergebende aktuelle Wert wieder innerhalb des zugehörigen Wertebereichs zurück bringt. Alternativ auszuwählende Schaltzustandskombinationen, insbesondere mit eventuell weniger Übergängen zur vorangehende ausgewählten Schaltzustandskombination sind in der Tabelle nicht abgelegt. Mehrere Übergänge zwischen Schaltzustandskombinationen generieren aber eine Vielzahl an Schalthandlungen der Leistungshalbleiterschalter der Umrichterschaltung, wodurch die Schaltfrequenz der Leistungshalbleiterschalter ansteigt. Eine solche hohe Schaltfrequenz erzeugt aber in den Leistungshalbleiterschaltern der Umrichterschaltung Wärmeverluste (höherer Energieverbrauch), durch welche die Leistungshalbleiterschalter schneller altern, beschädigt oder gar zerstört werden können.

In der EP 1 670 135 A1 ist dazu ein Verfahren zum Betrieb einer rotierenden elektrischen Maschine angegeben, durch welches die Schalfrequenz von Leistungshalbleiterschaltern einer mit der rotierenden elektrischen Maschine phasenmässig verbundenen Umrichterschaltung zur Schaltung von m Spannungsniveaus reduziert werden kann, wobei m ≥ 2 ist. Verfahrensmässig werden in einem Schritt (a) die Phasen der Umrichterschaltung mit dem Gleichspannungskreis nach einer ausgewählten Schaltzustandskombination von Schaltzuständen von Leistungshalbleiterschaltern der Umrichterschaltung verbunden. Die Auswahl dieser Schaltzustandskombination erfolgt in folgenden weiteren Schritten:

(b) beginnend mit einem Startabtastzeitpunkt k für eine wählbare Anzahl N Abtastzeitpunkte: Bestimmung sämtlicher Schaltzustandskombinationen zu jedem der N Abtastzeitpunkte, wobei N ≥ 1 ist,

(c) Bildung von Schaltzustandssequenzen für jede bestimmte Schaltzustandskombination zum Startabtastzeitpunkt k, wobei jede Schaltzustandssequenz eine Aneinanderreihung von zu der jeweiligen Schaltzustandskombination zum Startabtastzeitpunkt k zugehöriger bestimmter Schaltzustandskombinationen der N Abtastzeitpunkte ist,

(d) für jede der Schaltzustandssequenzen Berechnung einer Drehmomenttrajektorie der rotierenden elektrischen Maschine und einer magnetischen Statorflusstrajektorie der rotierenden elektrischen Maschine aus ermittelten Zustandswertesätze der rotierenden elektrischen Maschine und der Umrichterschaltung für den Startabtastzeitpunkt k bis zum Abtastzeitpunkt k+N,

(e) Auswahl einer Schaltzustandssequenz, bei welcher eine zugehörige Drehmomenttrajektorie und eine magnetische Statorflusstrajektorie zum (k+N)-ten Abtastzeitpunkt jeweils innerhalb eines vorgegebenen Wertebereichs liegt und setzen dieser ausgewählten Schaltzustandssequenz,

(f) Wiederholung der Schritte (a) bis (d), wobei k=k+1 ist.

Bei dem Verfahren zum Betrieb einer rotierenden elektrischen Maschine nach der EP 1 670 135 A1 wird nur eine Schaltzustandskombination ausgewählt und gesetzt, bei welcher die zugehörige Drehmomenttrajektorie und die zugehörige magnetische Statorflusstrajektorie zum (k+N)-ten Abtastzeitpunkt jeweils innerhalb eines vorgegebenen Wertebereichs liegt. Es ist aber möglich, dass die Drehmomenttrajektorie oder die magnetische Statorflusstrajektorie jeder zugehörigen Schaltzustandskombination schon zum k-ten oder zum (k+1)-ten Abtastzeitpunkt ausserhalb des vorgegebenen Wertebereich liegt, wobei das Verfahren zum Betrieb einer rotierenden elektrischen Maschine nach der EP 1 670 135 A1 einen solchen Zustand nicht handhaben kann. Damit ist aber nur ein eingeschränkter Betrieb der rotierenden elektrischen Maschine möglich.

**Darstellung der Erfindung**

Aufgabe der Erfindung ist es deshalb, ein Verfahren zum Betrieb einer rotierenden elektrischen Maschine anzugeben, welches Schaltzustandskombinationen mit jeweils zugehöriger Drehmomenttrajektorie und magnetischer Statorflusstrajektorie, welche Drehmomenttrajektorie oder magnetischer Statorflusstrajektorie ausserhalb des vorgegebenen Wertebereich liegen, handhaben kann. Diese Aufgabe wird durch die Merkmale der unabhängigen Ansprüche gelöst. In den abhängigen Ansprüchen sind vorteilhafte Weiterbildungen der Erfindung angegeben. Beim Verfahren zum Betrieb einer rotierenden elektrischen Maschine ist die rotierende elektrische Maschine phasenmässig mit einer einen Gleichspannungskreis aufweisenden Umrichterschaltung zur Schaltung von m Spannungsniveaus verbunden, wobei m ≥ 2 ist. Verfahrensmässig werden in einem Schritt (a) die Phasen der Umrichterschaltung mit dem Gleichspannungskreis nach einer ausgewählten Schaltzustandskombination von Schaltzuständen von Leistungshalbleiterschaltern der Umrichterschaltung verbunden. Die Auswahl dieser Schaltzustandskombination erfolgt in folgenden weiteren Schritten:

(b) beginnend mit einem Startabtastzeitpunkt k für eine wählbare Anzahl L Abtastzeitpunkte:

Bestimmung sämtlicher Schaltzustandskombinationen zu jedem der L Abtastzeitpunkte, wobei L ≥ 1 ist,

(c) Bildung von Schaltzustandssequenzen für jede bestimmte Schaltzustandskombination zum Startabtastzeitpunkt k, wobei jede Schaltzustandssequenz eine Aneinanderreihung von zu der jeweiligen Schaltzustandskombination zum Startabtastzeitpunkt k zugehöriger bestimmter Schaltzustandskombinationen der L Abtastzeitpunkte ist, und

(d) für jede der Schaltzustandssequenzen Berechnung einer Drehmomenttrajektorie der rotierenden elektrischen Maschine und einer magnetischen Statorflusstrajektorie der rotierenden elektrischen Maschine aus ermittelten Zustandswertesätze der rotierenden elektrischen Maschine und der Umrichterschaltung für den Startabtastzeitpunkt k bis zum Abtastzeitpunkt k+L.

Die Auswahl der Schaltzustandskombination erfolgt nun nach folgenden weiteren Schritten:

(e) falls die Drehmomenttrajektorie zum k-ten Abtastzeitpunkt eine vorgegebene obere Wertebereichsgrenze überschreitet oder eine vorgegebene untere Wertebereichsgrenze unterschreitet, Berechnung eines auf die obere und untere Wertebereichsgrenze bezogenen Drehmomentverletzungswertes für den Abtastzeitpunkt k bis zu dem Abtastzeitpunkt k+L,

(f) falls die magnetischen Statorflusstrajektorie zum k-ten Abtastzeitpunkt eine vorgegebene obere Wertebereichsgrenze überschreitet oder eine vorgegebene untere Wertebereichsgrenze unterschreitet, Berechnung eines auf die obere und untere Wertebereichsgrenze bezogenen Statorflussverletzungswertes für den Abtastzeitpunkt k bis zu dem Abtastzeitpunkt k+L,

(g) für jede Schaltzustandssequenz und für den Abtastzeitpunkt k bis zu dem Abtastzeitpunkt k+L Bestimmung des Maximalwertes aus den Drehmomentverletzungswerten und den Statorflussverletzungswerten,

(h) für jede Schaltzustandssequenz Bildung der Summe aus den Maximalwerten,

(i) Setzen derjenigen bestimmten Schaltzustandskombination zum Startabtastzeitpunkt k als ausgewählte Schaltzustandskombination, bei der die Summe der Maximalwerte am kleinsten ist,

(j) Wiederholung der Schritte (a) bis (i), wobei k=k+1 ist.

Als Alternative zu den vorstehend genannten Schritten (g) bis (i) kann die Auswahl Schaltzustandskombination auch nach folgenden weiteren Schritten erfolgen:

(g) für jede Schaltzustandssequenz und für den Abtastzeitpunkt k bis zu dem Abtastzeitpunkt k+L Bildung der Summe aus den Drehmomentverletzungswerten und Bildung der Summe aus den Statorflussverletzungswerten,

(h) für jede Schaltzustandssequenz Bildung des Maximalwertes aus der Summe der Drehmomentverletzungswerte und der Summe der Statorflussverletzungswerte,

(i) Setzen derjenigen bestimmten Schaltzustandskombination zum Startabtastzeitpunkt k als ausgewählte Schaltzustandskombination, bei der der Maximalwert am kleinsten ist.

Mittels der Schritte (e) bis (j) wird mit Vorteil für den Fall, dass die jeweils zugehörige Drehmomenttrajektorie oder die magnetischer Statorflusstrajektorie ausserhalb des vorgegebenen Wertebereichs liegt, stets die optimale Schaltzustandskombination gewählt. Damit ist das erfindungsgemässe Verfahren in der Lage, Schaltzustandskombinationen mit jeweils zugehöriger Drehmomenttrajektorie und magnetischer Statorflusstrajektorie, welche ausserhalb des vorgegebenen Wertebereichs liegen, handhaben zu können. Demzufolge ist nun ein uneingeschränkter Betrieb der rotierenden elektrischen Maschine möglich.

Diese und weitere Aufgaben und Vorteile der vorliegenden Erfindung werden aus der nachfolgenden detaillierten Beschreibung bevorzugter Ausführungsformen der Erfindung in Verbindung mit der Zeichnung offensichtlich.

## Kurze Beschreibung der Zeichnungen

Es zeigen:

Fig. 1   eine Ausführungsform einer dreiphasigen Umrichterschaltung zur Schaltung von drei Spannungsniveaus,

Fig. 2   ein Zustandsdiagramm mit Schaltzustandkombinationen der Phasen der Umrichterschaltung und

Fig. 3   ein schematischer Verlauf einer berechneten Drehmomenttrajektorie für L=3 Abtastzeitpunkte.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

## Wege zur Ausführung der Erfindung

In Fig. 1 ist eine Ausführungsform einer dreiphasigen Umrichterschaltung 2 zur Schaltung von drei Spannungsniveaus gezeigt, wobei eine rotierende elektrische Maschine 1 phasenmässig mit einem Gleichspannungskreis 3 Umrichterschaltung 2 verbunden ist. Allgemein kann die rotierende elektrische Maschine 1 mit einer Umrichterschaltung 2 zur Schaltung von m Spannungsniveaus verbunden sein, wobei dann $m \geq 2$ ist. Gemäss Fig. 1 ist der Gleichspannungskreis 3 durch einen ersten Kondensator $C_1$ und durch einen in Serie zum ersten Kondensator $C_1$ geschalteten zweiten Kondensator $C_2$ gebildet, wobei $C_1$ wertemässig im wesentlichen gleich $C_2$ ist. Der Gleichspannungskreis 3 gemäss der beispielhaften Ausführungsform einer Umrichterschaltung zur Schaltung von drei Spannungsniveaus nach Fig. 1 weist am ersten Kondensator $C_1$ einen ersten Hauptanschluss $V_+$, am zweiten Kondensator $C_2$ einen zweiten Hauptanschluss V- und einen durch die zwei seriell verbundenen Kondensatoren $C_1$, $C_2$ gebildeten Teilanschluss NP auf. Darüber hinaus umfasst die Umrichterschaltung gemäss Fig. 1 ein für jede Phase u, v, w vorgesehenes Teilumrichtersystem 4, welches jeweils durch eine erste Schaltgruppe 5, durch eine zweite Schaltgruppe 6 und durch eine dritte Schaltgruppe 7 gebildet ist, wobei jede Schaltgruppe 5, 6, 7 durch zwei in Serie geschaltete Leistungshalbleiterschalter gebildet ist. Weiterhin ist bei jedem Teilumrichtersystem 4 die erste Schaltgruppe 5 mit dem ersten Hauptanschluss $V_+$ und die zweite Schaltgruppe 6 mit dem zweiten Hauptanschluss $V_-$ verbunden. Ferner ist die erste Schaltgruppe 5 mit der zweiten Schaltgruppe 6 seriell verbunden, wobei der Verbindungspunkt der ersten Schaltgruppe 5 mit der zweiten Schaltgruppe 6 einen Phasenanschluss bildet. Die dritte Schaltgruppe 7, welche als Klemmschaltgruppe ausgebildet ist, ist mit der ersten Schaltgruppe 5, insbesondere mit dem Verbindungspunkt der zwei in Serie geschalteten Leistungshalbleiterschalter der ersten Schaltgruppe 5, verbunden. Zudem ist die dritte Schaltgruppe 7 mit der zweiten Schaltgruppe 6, insbesondere mit dem Verbindungspunkt der zwei in Serie geschalteten Leistungshalbleiterschalter der zweiten Schaltgruppe 6, verbunden. Darüber hinaus ist die dritte Schaltgruppe 7, insbesondere der Verbindungspunkt der zwei in Serie geschalteten Leistungshalbleiterschalter der dritten Schaltgruppe 7, mit dem Teilanschluss NP verbunden. Die Leistungshalbleiterschalter der ersten und zweiten Schaltgruppe 5, 6 sind gemäss Fig. 1 als ansteuerbare bidirektionale Leistungshalbleiterschalter ausgebildet, wobei die Leistungshalbleiterschalter der dritten Schaltgruppe 7 als unidirektionale nicht-ansteuerbare Leistungshalbleiterschalter ausgebildet sind. Es ist aber auch denkbar, dass auch die Leistungshalbleiterschalter der dritten Schaltgruppe 7 als ansteuerbare bidirektionale Leistungshalbleiterschalter ausgebildet sind.

Verfahrensmässig werden nun die Phasen u, v, w der Umrichterschaltung 2, bei der es sich allgemein um eine Umrichterschaltung 2 zur Schaltung m Spannungsniveaus handelt, in einem ersten Schritt (a) mit dem Gleichspannungskreis 3 nach einer ausgewählten Schaltzustandskombination $SK_{a,k}$ von Schaltzuständen der Leistungshalbleiterschaltern der Umrichterschaltung 2 verbunden. Wie bereits eingangs erwähnt, ist in Fig. 2 beispielhaft ein Zustandsdiagramm von Schaltzustandskombinationen einer Umrichterschaltung 2 zur Schaltung von m=3 Spannungsniveaus gezeigt, wobei "+" für eine Verbindung der entsprechenden Phase u, v, w mit dem ersten Hauptanschluss $V_+$, "-" für eine Verbindung der entsprechenden Phase u, v, w mit dem zweiten Hauptanschluss $V_-$ und "0" für eine Verbindung der entsprechenden Phase u, v, w mit dem Teilanschluss NP steht und die Linien zwischen den Schaltzustandskombinationen SK zulässige Übergänge zwischen den Schaltzustandskombinationen SK darstellen. Es sei erwähnt, dass sich ein Zustandsdiagramm von Schaltzustandskombinationen einer Umrichterschaltung 2 beispielsweise zur Schaltung von m=5 Spannungsniveaus anders darstellen würde. Insbesondere kann der Fachmann sicher eine Umrichterschaltung realisieren, bei welcher ausgehend von einer Schaltzustandskombination SK ohne Einschränkung alle möglichen schaltbaren Schaltzustandskombinationen SK dieser Umrichterschaltung geschaltet werden können.

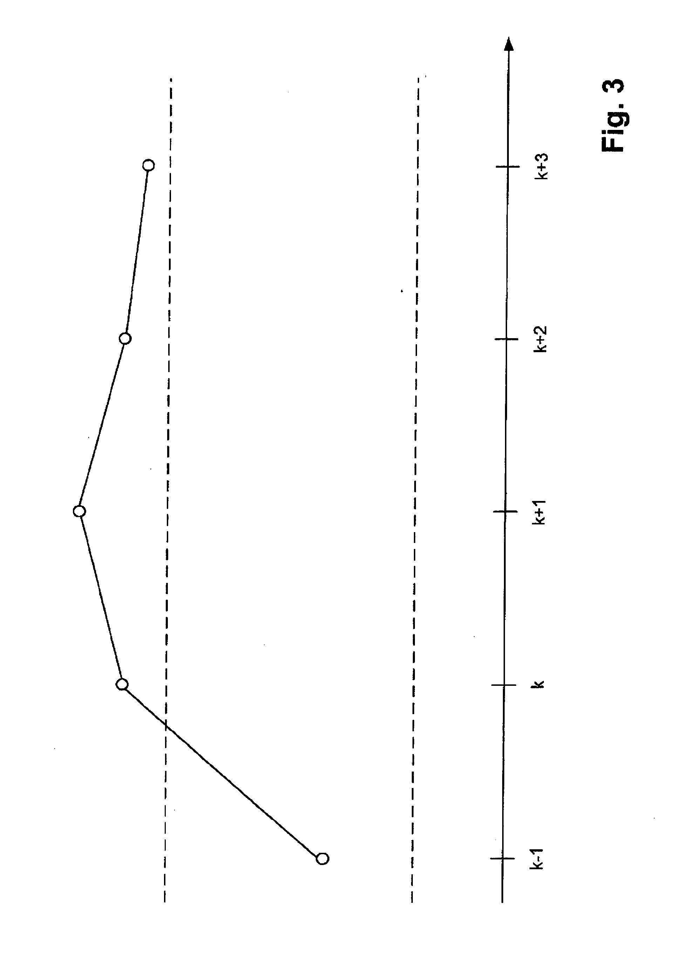

Darüber hinaus erfolgt die Auswahl der vorstehend genannten Schaltzustandskombination $SK_{a,k}$ in den nachfolgend detailliert beschriebenen weiteren Schritten. Bei Schritt (b) werden beginnend mit einem Startabtastzeitpunkt k für eine wählbare Anzahl L Abtastzeitpunkte sämtliche Schaltzustandskombinationen $SK_k$,..., $SK_{k+L}$ zu jedem der L Abtastzeitpunkte, vorzugsweise ausgehend von der jeweils vorangehenden bestimmten Schaltzustandskombination $SK_{k-1}$, bestimmt, wobei L ≥ 1 ist, und wobei vorzugsweise die erste vorangehende bestimmte Schaltzustandskombination $SK_{k-1}$ die vorangehende ausgewählte Schaltzustandskombination $SK_{a,k-1}$, d.h. zum Abtastzeitpunkt k-1, ist. Bei Schritt (c) werden für jede bestimmte Schaltzustandskombination $SK_k$ zum Startabtastzeitpunkt k Schaltzustandssequenzen SSK gebildet, wobei jede Schaltzustandssequenz SSK eine Aneinanderreihung von zu der jeweiligen Schaltzustandskombination $SK_k$ zum Startabtastzeitpunkt k zugehöriger bestimmter Schaltzustandskombinationen $SK_k$, ..., $SK_{k+L}$ der L Abtastzeitpunkte ist. Anschaulich gesehen repräsentiert eine solche Schaltzustandssequenz SSK beispielhaft eine Reihe von möglichen Schaltzustandskombinationen $SK_k$, ..., $SK_{k+L}$ gemäss Fig. 2 entlang der zugehörigen Linien zu einer der möglichen Schaltzustandskombinationen $SK_k$ zum Startabtastzeitpunkt k. Bei Schritt (d) wird für jede der Schaltzustandssequenzen SSK eine Drehmomenttrajektorie M der rotierenden elektrischen Maschine 1 und eine magnetische Statorflusstrajektorie $\phi$ der rotierenden elektrischen Maschine 1 aus ermittelten Zustandswertesätze $X_{e,k}$,..., $X_{e,k+L}$ der rotierenden elektrischen Maschine 1 und der Umrichterschaltung 2 für den Startabtastzeitpunkt k bis zum Abtastzeitpunkt k+L berechnet. Jeder der vorstehend genannten ermittelten Zustandswertesätzen $X_{e,k}$,..., $X_{e,k+L}$ beinhaltet beispielsweise zwei Statorflusswerte $\phi_{eS1,k}$,..., $\phi_{eS1,k+L}$; $\phi_{eS2,k}$,..., $\phi_{eS2,k+L}$, zwei Rotorflusswerte $\phi_{eR1,k}$,..., $\phi_{eR1,k+L}$; $\phi_{eR2,k}$,..., $\phi_{eR2,k+L}$ Und gegebenenfalls einen Geschwindigkeitswert $V_{e,k}$,..., $V_{e,k+L}$. Zur Ermittlung der Zustandswertesätze $X_{e,k}$,..., $X_{e,k+L}$ werden zunächst die beiden Statorflusswerte $\phi_{eS1,k}$; $\phi_{eS2,k}$ zum Abtastzeitpunkt k, die beiden Rotorflusswerte $\phi_{eR1,k}$; $\phi_{eR2,k}$ zum Abtastzeitpunkt k und gegebenenfalls der Geschwindigkeitswert $V_{e,k}$ zum Abtastzeitpunkt k beispielsweise durch Messung oder Schätzung ermittelt, wobei diese Werte den Zustandswertesatz $X_{e,k}$ zum Abtastzeitpunkt k bilden. Aus dem Zustandswertesatz $X_{e,k}$ zum Abtastzeitpunkt k werden dann Trajektorienwerte $M_{T,k}$; $\phi_{T,k}$ zum Abtastzeitpunkt k der Drehmomenttrajektorie M und der magnetische Statorflusstrajektorie $\phi$ nach einem für den Fachmann bekannten Berechnungsmodell, welches die elektrische Maschine 1 und die Umrichterschaltung 2 beschreibt beziehungsweise funktionell abbildet, berechnet. Dann wird nach dem Berechnungsmodell der Zustandswertesatz $X_{e,k+1}$ zum Abtastzeitpunkt k+1 in Abhängigkeit des Zustandswertesatzes $X_{e,k}$ zum Abtastzeitpunkt k und in Abhängigkeit der bestimmten Schaltzustandskombinationen $SK_k$ zum Abtastzeitpunkt k der zugehörigen Schaltzustandssequenz SSK durch Berechnung ermittelt und daraus dann die Trajektorienwerte $M_{T,k+1}$; $\phi_{T,k+1}$ zum Abtastzeitpunkt k+1 der Drehmomenttrajektorie M und der magnetischen Statorflusstrajektorie $\phi$ berechnet. Die Berechnung der Zustandswertesätze $X_{e,k+2},... , X_{e,k+L}$ für die Abtastzeitpunkte k+2 bis k+L erfolgt analog zu der vorstehend aufgezeigten Berechnung des Zustandswertesatzes $X_{e,k+1}$, wobei für jede Berechnung der Zustandswertesätze $X_{e,k+2},... , X_{e,k+L}$ jeweils die zugehörigen vorangehenden berechneten Zustandswertesätze $X_{e,k+1},... , X_{e,k+L-1}$ sowie die bestimmte Schaltzustandskombinationen $SK_{k+1}, ..., SK_{k+L-1}$ zum Abtastzeitpunkt k+1 bis k+L-1 der zugehörigen Schaltzustandssequenz SSK herangezogen werden. Die aus den Zustandswertesätze $X_{e,k+2},... , X_{e,k+L}$ folgende Berechnung der Trajektorienwerte $M_{T,k+2}, ..., M_{T,k+L}$; $\phi_{T,k+2}, ..., \phi_{T,k+L}$ für die Abtastzeitpunkte k+2 bis k+L erfolgt ebenfalls analog zu der vorstehend aufgezeigten Berechnung der Trajektorienwerte $M_{T,k}$; $\phi_{T,k}$; $M_{T,k+1}$; $\phi_{T,k+1}$ für die Abtastzeitpunkte k und k+1. Durch die vorstehend beschriebene Berechnung der Trajektorienwerte $M_{T,k}, ..., M_{T,k+L}$; $\phi_{T,k}, ..., \phi_{T,k+L}$ entsteht für jede Schaltzustandssequenz SSK besagte Drehmomenttrajektorie M der rotierenden elektrischen Maschine 1 und eine magnetische Statorflusstrajektorie $\phi$ der rotierenden elektrischen Maschine 1, wobei in Fig. 3 beispielhaft ein schematischer Verlauf von solchen berechneten Drehmomenttrajektorien M von zugehörigen Schaltzustandssequenzen SSK für L=3 Abtastzeitpunkte gezeigt ist und dabei die Punkte der Drehmomenttrajektorien M den zugehörigen ermittelten Trajektorienwerten $M_{T,k}, ..., M_{T,k+L}$ entsprechen. Es sei erwähnt, dass auch zunächst sämtliche Zustandswertesätze $X_{e,k},... , X_{e,k+L}$ für die Abtastzeitpunkte k bis k+L gemäss vorstehend erläutertem Vorgehen ermittelt werden können und danach dann daraus die jeweiligen Trajektorienwerte $M_{T,k}, ..., M_{T,k+L}$; $\phi_{T,k}, ..., \phi_{T,k+L}$ für die Abtastzeitpunkte k bis k+L zur Bildung der Drehmomenttrajektorie M und der magnetische Statorflusstrajektorie $\phi$ nach vorstehendem Vorgehen berechnet werden.

Erfindungsgemäss wird in dem weiteren Schritt (e), falls die Drehmomenttrajektorie M zum k-ten Abtastzeitpunkt eine vorgegebene obere Wertebereichsgrenze $y_{M,max}$ überschreitet oder eine vorgegebene untere Wertebereichsgrenze $y_{M,min}$ unterschreitet, ein auf die obere und untere Wertebereichsgrenze $y_{M,min}$ ,$y_{M,max}$ bezogener Drehmomentverletzungswert $v_{M,k},...,v_{M,k+L}$ für den Abtastzeitpunkt k bis zu dem Abtastzeitpunkt k+L berechnet. Gemäss Fig. 3 ist vorgegebene Wertebereich mit der oberen und unteren Wertebereichsgrenze $y_{M,min}$ ,$y_{M,max}$ durch die zwei gestrichelten horizontalen Linien angedeutet ist. Es sei erwähnt, dass der jeweils vorgegebene Wertebereich zeitvariant ist und gängigerweise durch einen übergeordneten Regelkreis aus Referenzwerten des Drehmoments der rotierenden elektrischen Maschine 1 und des magnetischen Statorflusses der rotierenden elektrischen Maschine 1 bestimmt wird, wobei dem Fachmann solche Regelkreise bekannt sind. Desweiteren wird bei Schritt (f), falls die magnetischen Statorflusstrajektorie $\phi$ zum k-ten Abtastzeitpunkt eine vorgegebene obere Wertebereichsgrenze $y_{S,max}$ überschreitet oder eine vorgegebene untere Wertebereichsgrenze $y_{S,min}$ unterschreitet, ein auf die obere und untere Wertebereichsgrenze $y_{S,min}$ ,$y_{S,max}$ bezogener Statorflussverletzungswertes $v_{S,k},...,v_{S,k+L}$ für den Abtastzeitpunkt k bis zu dem Abtastzeitpunkt k+L berechnet. Bei Schritt (g) wird dann für jede Schaltzustandssequenz SSK und für den Abtastzeitpunkt k bis zu dem Abtastzeitpunkt k+L der Maximalwert $v_{max}$ aus den Drehmomentverletzungswerten $v_{M,k},...,v_{M,k+L}$ und den Statorflussverletzungswerten $v_{S,k},...,v_{S,k+L}$ bestimmt. Bei Schritt (h) wird anschliessend für jede Schaltzustandssequenz SSK die Summe $S_{vmax}$ aus den Maximalwerten $v_{max}$ gebildet. In einem weiteren Schritt (i) wird dann diejenige bestimmte Schaltzustandskombination $SK_k$ zum Startabtastzeitpunkt k als ausgewählte Schaltzustandskombination $SK_{a,k}$ gesetzt, bei der die Summe $S_{vmax}$ der Maximalwerte $V_{max}$ am kleinsten ist.

Als Alternative zu den vorstehend genannten Schritten (g) bis (i) kann die Auswahl Schaltzustandskombination $SK_{a,k}$ auch nach folgenden weiteren Schritten erfolgen:

(g) für jede Schaltzustandssequenz SSK und für den Abtastzeitpunkt k bis zu dem Abtastzeitpunkt k+L Bildung der Summe $S_{M,v}$ aus den Drehmomentverletzungswerten $V_{M,k},...,V_{M,k+L}$ und Bildung der Summe $S_{S,v}$ aus den Statorflussverletzungswerten $v_{S,k},...,v_{S,k+L}$,

(h) für jede Schaltzustandssequenz SSK Bildung des Maximalwertes $v_{max}$ aus der Summe $S_{M,v}$ der Drehmomentverletzungswerte $v_{M,k},...,v_{M,k+L}$ und der Summe $S_{S,v}$ der Statorflussverletzungswerte $v_{S,k},...,v_{S,k+L}$,

(i) Setzen derjenigen bestimmten Schaltzustandskombination $SK_k$ zum Startabtastzeitpunkt k als ausgewählte Schaltzustandskombination $SK_{a,k}$, bei der der Maximalwert $v_{max}$ am kleinsten ist.

Schliesslich werden bei Schritt (j) die Schritte (a) bis (i) wiederholt, wobei k=k+1 ist, d.h. die Auswahl der Schaltzustandskombination $SK_{a,k}$ findet für k=k+1 gemäss dem vorstehend beschriebenen Ablauf nach den Schritten (a) bis (i) statt. L ist für jeden der Schritte (a) bis (j) konstant.

Mittels der Schritte (e) bis (j) wird mit Vorteil für den Fall, dass die jeweils zugehörige Drehmomenttrajektorie M oder die magnetischer Statorflusstrajektorie $\phi$ ausserhalb des vorgegebenen Wertebereichs liegt, stets die optimale Schaltzustandskombination $SK_{a,k}$ gewählt. Damit ist das erfindungsgemässe Verfahren in der Lage, Schaltzustandskombinationen mit jeweils zugehöriger Drehmomenttrajektorie M und magnetischer Statorflusstrajektorie $\phi$, welche ausserhalb des vorgegebenen Wertebereichs liegen, handhaben zu können. Somit ist vorteilhaft ein uneingeschränkter Betrieb der rotierenden elektrischen Maschine 1 möglich.

Es sei erwähnt, dass die Schritte (a) bis (j) als Software realisiert werden können und diese dann beispielsweise auf ein Computersystem, insbesondere mit einem digitalen Signalprozessor, geladen werden und darauf ablaufen können.

Wie bereits erwähnt, ist in Fig. 1 eine Umrichterschaltung 2 zur Schaltung von m=3 Spannungsniveaus gezeigt, wobei der Gleichspannungskreis 3 dann m-2 Teilanschlüsse NP, d.h. einen einzigen Teilanschluss NP aufweist. Für den allgemeinen Fall einer Umrichterschaltung 2 zur Schaltung von m Spannungsniveaus mit m ≥ 3 weist die Umrichterschaltung 2 dann am Gleichspannungskreis 3 m-2 Teilanschlüsse NP auf. Bezüglich Schritt (d) des erfindungsgemässen Verfahrens bedeutet dies, dass für jede der Schaltzustandssequenzen SSK zusätzlich m-2 Potentialtrajektorien $U_{NP}$ für Potentiale an den m-2 Teilanschlüssen NP aus ermittelten Zustandswertesätzen $X_{e,k},... X_{e,k+L}$ der rotierenden elektrischen Maschine 1 und der Umrichterschaltung 2 für den Startabtastzeitpunkt k bis zum Abtastzeitpunkt k+L berechnet werden. Die angesprochene Berechnung der m-2 Potentialtrajektorien $U_{NP}$ erfolgt analog der bereits erläuterten Berechnung der entsprechenden Drehmomenttrajektorie M der rotierenden elektrischen Maschine 1 und magnetischen Statorflusstrajektorie Φ der rotierenden elektrischen Maschine 1. Weiterhin wird für m ≥ 3 bezüglich Schritt (e), falls die m-2 Potentialtrajektorien $U_{NP}$ zum k-ten Abtastzeitpunkt eine vorgegebene obere Wertebereichsgrenze $y_{NP,max}$ überschreitet oder eine vorgegebene untere Wertebereichsgrenze $y_{NP,min}$ unterschreitet, ein auf die obere und untere Wertebereichsgrenze $y_{NP,min}, y_{NP,max}$ bezogener Potentialverletzungswert $v_{NP,k},...,v_{NP,k+L}$ für den Abtastzeitpunkt k bis zu dem Abtastzeitpunkt k+L für jede Potentialtrajektorie $U_{NP}$ berechnet und bezüglich Schritt (g) wird dann für jede Schaltzustandssequenz SSK und für den Abtastzeitpunkt k bis zu dem Abtastzeitpunkt k+L der Maximalwert $v_{max}$ zusätzlich aus den Potentialverletzungswerten $v_{NP,k},...,v_{NP,k+L}$ bestimmt.

Es versteht sich, dass für m ≥ 3 die Schritte (a) bis (c) und (h) bis (j) beibehalten werden. Es sei erwähnt, dass für m ≥ 3 Schritt (d), (e) und (g) ebenfalls als Software realisiert werden kann und dieser dann beispielsweise auf ein Computersystem, insbesondere mit einem digitalen Signalprozessor, geladen werden und darauf ablaufen kann.

Alternativ wird für m ≥ 3 bezüglich Schritt (g) für jede Schaltzustandssequenz SSK und für den Abtastzeitpunkt k bis zu dem Abtastzeitpunkt k+L zusätzlich die Summe $S_{NP,v}$ aus den Potentialverletzungswerten $v_{NP,k},...,v_{NP,k+L}$ gebildet und bezüglich Schritt (h) wird dann für jede Schaltzustandssequenz SSK der Maximalwert $v_{max}$ zusätzlich aus der Summe $S_{NP,v}$ der Potentialverletzungswerte $v_{NP,k},...,v_{NP,k+L}$ gebildet.

Es versteht sich, dass in diesem Alternativen Fall für m ≥ 3 die Schritte (a) bis (c), (i) und (j) beibehalten werden und Schritt (g) und (h) dann ebenfalls als Software realisiert werden kann und dieser dann beispielsweise auf ein Computersystem, insbesondere mit einem digitalen Signalprozessor, geladen werden und darauf ablaufen kann.

Nachfolgend wird näher auf die Berechnung der Drehmomentverletzungswerte $v_{M,k},...,v_{M,k+L}$, der Statorflussverletzungswertes $v_{S,k},...,v_{S,k+L}$, und der Potentialverletzungswerte $v_{NP,k},...,v_{NP,k+L}$ eingegangen. Falls die Drehmomenttrajektorie M zum k-ten Abtastzeitpunkt die vorgegebene obere Wertebereichsgrenze $y_{M,max}$ überschreitet, erfolgt die Berechnung des auf die obere und untere Wertebereichsgrenze $y_{M,min}, y_{M,max}$ bezogenen Drehmomentverletzungswertes $v_{M,k},...,v_{M,k+L}$ für den Abtastzeitpunkt k bis zu dem Abtastzeitpunkt k+L nach folgender Formel

$$v_{M,k},...,v_{M,k+L} = \frac{M_{T,k},...,M_{T,k+L} - y_{M,max}}{y_{M,max} - y_{M,min}}.$$

Unterschreitet die Drehmomenttrajektorie M zum k-ten Abtastzeitpunkt hingegen die vorgegebene untere Wertebereichsgrenze $y_{M,min}$, so erfolgt die Berechnung des auf die obere und untere Wertebereichsgrenze $y_{M,min}, y_{M,max}$ bezogenen Drehmomentverletzungswertes $v_{M,k},..., V_{M,k+L}$ für den Abtastzeitpunkt k bis zu dem Abtastzeitpunkt k+L nach folgender Formel

$$v_{M,k},...,v_{M,k+L} = \frac{y_{M,min} - M_{T,k},...,M_{T,k+L}}{y_{M,max} - y_{M,min}}.$$

$M_{T,k},..., M_{T,k+L}$ sind dabei die Trajektorienwerte der Drehmomenttrajektorie M für den Abtastzeitpunkt k bis zu dem Abtastzeitpunkt k+L.

Falls die magnetische Statorflusstrajektorie Φ zum k-ten Abtastzeitpunkt die vorgegebene obere Wertebereichsgrenze $y_{S,max}$ überschreitet, dann erfolgt die Berechnung des auf die obere und untere Wertebereichsgrenze $y_{S,min}, y_{S,max}$ bezogenen Statorflussverletzungswertes $v_{S,k},...,v_{S,k+L}$ für den Abtastzeitpunkt k bis zu dem Abtastzeitpunkt k+L nach folgender Formel

$$v_{S,k}, ..., v_{S,k+L} = \frac{\Phi_{T,k}, ..., \Phi_{T,k+L} - y_{S,max}}{y_{S,max} - y_{S,min}}.$$

Unterschreitet die magnetische Statorflusstrajektorie $\Phi$ zum k-ten Abtastzeitpunkt hingegen die vorgegebene untere Wertebereichsgrenze $y_{S,min}$, so erfolgt die Berechnung des auf die obere und untere Wertebereichsgrenze $y_{S,min}, y_{S,max}$ bezogenen Statorflussverletzungswertes $v_{S,k}, ..., v_{S,k+L}$ für den Abtastzeitpunkt k bis zu dem Abtastzeitpunkt k+L nach folgender Formel

$$v_{S,k}, ..., v_{S,k+L} = \frac{y_{S,min} - \Phi_{T,k}, ..., \Phi_{T,k+L}}{y_{S,max} - y_{S,min}},$$

$\phi_{T,k}, ..., \phi_{T,k+L}$ sind dabei die Trajektorienwerte der magnetischen Statorflusstrajektorie $\phi$ für den Abtastzeitpunkt k bis zu dem Abtastzeitpunkt k+L.

Falls die m-2 Potentialtrajektorien $U_{NP}$ zum k-ten Abtastzeitpunkt die vorgegebene obere Wertebereichsgrenze $y_{NP,max}$ überschreiten, erfolgt Berechnung des auf die obere und untere Wertebereichsgrenze $y_{NP,min}, y_{NP,max}$ bezogenen Potentialverletzungswertes $v_{NP,k}, ..., v_{NP,k+L}$ für den Abtastzeitpunkt k bis zu dem Abtastzeitpunkt k+L nach folgender Formel

$$v_{NP,k}, ..., v_{NP,k+L} = \frac{U_{T,k}, ..., U_{T,k+L} - y_{NP,max}}{y_{NP,max} - y_{NP,min}}.$$

Falls die m-2 Potentialtrajektorien $U_{NP}$ zum k-ten Abtastzeitpunkt die vorgegebene untere Wertebereichsgrenze $y_{NP,min}$ hingegen unterschreiten, so erfolgt die Berechnung des auf die obere und untere Wertebereichsgrenze $y_{NP,min}, y_{NP,max}$ bezogenen Potentialverletzungswertes $v_{NP,k}, ..., v_{NP,k+L}$ für den Abtastzeitpunkt k bis zu dem Abtastzeitpunkt k+L nach folgender Formel

$$v_{NP,k}, ..., v_{NP,k+L} = \frac{y_{NP,min} - U_{T,k}, ..., U_{T,k+L}}{y_{NP,max} - y_{NP,min}},$$

wobei $U_{T,k}, ..., U_{T,k+L}$ die Trajektorienwerte der m-2 Potentialtrajektorien $U_{NP}$ für den Abtastzeitpunkt k bis zu dem Abtastzeitpunkt k+L sind.

Es sei der Vollständigkeit halber erwähnt, dass falls allgemein die jeweilige Trajektorie zum k-ten Abtastzeitpunkt innerhalb des Bandes, gebildet durch die zugehörige oberen und untere Wertebereichsgrenze, liegt, der zugehörige Verletzungswert zum Abtastzeitpunkt k bis zu dem Abtastzeitpunkt k+L zu Null gesetzt wird.

**Bezugszeichenliste**

1    rotierende elektrische Maschine
2    Umrichterschaltung zur Schaltung von drei Spannungsniveaus
3    Gleichspannungskreis
4    Teilumrichtersystem
5    erste Schaltgruppe
6    zweite Schaltgruppe
7    dritte Schaltgruppe

**Patentansprüche**

1.   Verfahren zum Betrieb einer rotierenden elektrischen Maschine (1), wobei die rotierende elektrische Maschine phasenmässig mit einer einen Gleichspannungskreis (3) aufweisenden Umrichterschaltung (2) zur Schaltung von m Spannungsniveaus verbunden ist, wobei m $\geq$ 2 ist, mit den Schritten

(a) Verbindung der Phasen (u, v, w) der Umrichterschaltung (2) mit dem Gleichspannungskreis (3) nach einer ausgewählten Schaltzustandskombination ($SK_{a,k}$) von Schaltzuständen von Leistungshalbleiterschaltern der Umrichterschaltung (2), wobei die Auswahl der Schaltzustandskombination ($SK_{a,k}$) in folgenden weiteren Schritten erfolgt:

(b) beginnend mit einem Startabtastzeitpunkt k für eine wählbare Anzahl L Abtastzeitpunkte:

Bestimmung sämtlicher Schaltzustandskombinationen ($SK_k$, ..., $SK_{k+L}$) zu jedem der L Abtastzeitpunkte, wobei L $\geq$ 1 ist,

(c) Bildung von Schaltzustandssequenzen (SSK) für jede bestimmte Schaltzustandskombination ($SK_k$) zum Startabtastzeitpunkt k, wobei jede Schaltzustandssequenz (SSK) eine Aneinanderreihung von zu der jeweiligen Schaltzustandskombination ($SK_k$) zum Startabtastzeitpunkt k zugehöriger bestimmter Schaltzustandskombinationen ($SK_k$, ..., $SK_{k+L}$) der L Abtastzeitpunkte ist,

(d) für jede der Schaltzustandssequenzen (SSK) Berechnung einer Drehmomenttrajektorie (M) der rotierenden elektrischen Maschine (1) und einer magnetischen Statorflusstrajektorie ($\phi$) der rotierenden elektrischen Maschine (1) aus ermittelten Zustandswertesätze ($X_{e,k}$,... , $X_{e,k+L}$) der rotierenden elektrischen Maschine (1) und der Umrichterschaltung (2) für den Startabtastzeitpunkt k bis zum Abtastzeitpunkt k+L,

**gekennzeichnet durch** folgende weitere Schritte:

(e) falls die Drehmomenttrajektorie (M) zum k-ten Abtastzeitpunkt eine vorgegebene obere Wertebereichsgrenze ($y_{M,max}$) überschreitet oder eine vorgegebene untere Wertebereichsgrenze ($y_{M,min}$) unterschreitet, Berechnung eines auf die obere und untere Wertebereichsgrenze ($y_{M,min}$ ,$y_{M,max}$) bezogenen Drehmomentverletzungswertes ($v_{M,k}$,...,$v_{M,k+L}$) für den Abtastzeitpunkt k bis zu dem Abtastzeitpunkt k+L,

(f) falls die magnetischen Statorflusstrajektorie ($\phi$) zum k-ten Abtastzeitpunkt eine vorgegebene obere Wertebereichsgrenze ($y_{S,max}$) überschreitet oder eine vorgegebene untere Wertebereichsgrenze ($y_{S,min}$) unterschreitet, Berechnung eines auf die obere und untere Wertebereichsgrenze ($y_{S,min}$, $y_{S,max}$) bezogenen Statorflussverletzungswertes ($v_{S,k}$,...,$v_{S,k+L}$) für den Abtastzeitpunkt k bis zu dem Abtastzeitpunkt k+L,

(g) für jede Schaltzustandssequenz (SSK) und für den Abtastzeitpunkt k bis zu dem Abtastzeitpunkt k+L Bestimmung des Maximalwertes ($v_{max}$) aus den Drehmomentverletzungswerten ($v_{M,k}$,...,$v_{M,k+L}$) und den Statorflussverletzungswerten ($v_{S,k}$,...,$v_{S,k+L}$),

(h) für jede Schaltzustandssequenz (SSK) Bildung der Summe ($S_{vmax}$) aus den Maximalwerten ($v_{max}$),

(i) Setzen derjenigen bestimmten Schaltzustandskombination ($SK_k$) zum Startabtastzeitpunkt k als ausgewählte Schaltzustandskombination ($SK_{a,k}$), bei der die Summe ($S_{vmax}$) der Maximalwerte ($v_{max}$) am kleinsten ist,

(j) Wiederholung der Schritte (a) bis (i), wobei k=k+1 ist.

2. Verfahren zum Betrieb einer rotierenden elektrischen Maschine (1), wobei die rotierende elektrische Maschine phasenmässig mit einer einen Gleichspannungskreis (3) aufweisenden Umrichterschaltung (2) zur Schaltung von m Spannungsniveaus verbunden ist, wobei m $\geq$ 2 ist, mit den Schritten

(a) Verbindung der Phasen (u, v, w) der Umrichterschaltung (2) mit dem Gleichspannungskreis (3) nach einer ausgewählten Schaltzustandskombination ($SK_{a,k}$) von Schaltzuständen von Leistungshalbleiterschaltern der Umrichterschaltung (2), wobei die Auswahl der Schaltzustandskombination ($SK_{a,k}$) in folgenden weiteren Schritten erfolgt:

(b) beginnend mit einem Startabtastzeitpunkt k für eine wählbare Anzahl L Abtastzeitpunkte:

Bestimmung sämtlicher Schaltzustandskombinationen ($SK_k$, ..., $SK_{k+L}$) zu jedem der L Abtastzeitpunkte, wobei L $\geq$ 1 ist,

(c) Bildung von Schaltzustandssequenzen (SSK) für jede bestimmte Schaltzustandskombination ($SK_k$) zum Startabtastzeitpunkt k, wobei jede Schaltzustandssequenz (SSK) eine Aneinanderreihung von zu der jeweiligen Schaltzustandskombination ($SK_k$) zum Startabtastzeitpunkt k zugehöriger bestimmter Schaltzustandskombinationen ($SK_k$, ..., $SK_{k+L}$) der L Abtastzeitpunkte ist,

(d) für jede der Schaltzustandssequenzen (SSK) Berechnung einer Drehmomenttrajektorie (M) der rotierenden elektrischen Maschine (1) und einer magnetischen Statorflusstrajektorie ($\phi$) der rotierenden elektrischen Ma-

schine (1) aus ermittelten Zustandswertesätze ($X_{e,k}$,... , $X_{e,k+L}$) der rotierenden elektrischen Maschine (1) und der Umrichterschaltung (2) für den Startabtastzeitpunkt k bis zum Abtastzeitpunkt k+L,
**gekennzeichnet durch** folgende weitere Schritte:

(e) falls die Drehmomenttrajektorie (M) zum k-ten Abtastzeitpunkt eine vorgegebene obere Wertebereichsgrenze ($y_{M,max}$) überschreitet oder eine vorgegebene untere Wertebereichsgrenze ($y_{M,min}$) unterschreitet, Berechnung eines auf die obere und untere Wertebereichsgrenze ($y_{M,min}$ ,$y_{M,max}$) bezogenen Drehmomentverletzungswertes ($v_{M,k}$,..,$v_{M,k+L}$) für den Abtastzeitpunkt k bis zu dem Abtastzeitpunkt k+L,

(f) falls die magnetischen Statorflusstrajektorie ($\phi$) zum k-ten Abtastzeitpunkt eine vorgegebene obere Wertebereichsgrenze ($y_{S,max}$) überschreitet oder eine vorgegebene untere Wertebereichsgrenze ($y_{S,min}$) unterschreitet, Berechnung eines auf die obere und untere Wertebereichsgrenze ($y_{S,min}$ ,$y_{S,max}$) bezogenen Statorflussverletzungswertes ($v_{S,k}$,...,$v_{S,k+L}$) für den Abtastzeitpunkt k bis zu dem Abtastzeitpunkt k+L,

(g) für jede Schaltzustandssequenz (SSK) und für den Abtastzeitpunkt k bis zu dem Abtastzeitpunkt k+L Bildung der Summe ($S_{M,v}$) aus den Drehmomentverletzungswerten ($v_{M,k}$,...,$v_{M,k+L}$) und Bildung der Summe ($S_{S,v}$) aus den Statorflussverletzungswerten ($v_{S,k}$,...,$v_{S,k+L}$),

(h) für jede Schaltzustandssequenz (SSK) Bildung des Maximalwertes ($v_{max}$) aus der Summe ($S_{M,v}$) der Drehmomentverletzungswerte ($v_{M,k}$,...,$v_{M,k+L}$) und der Summe ($S_{S,v}$) der Statorflussverletzungswerte ($v_{S,k}$,...,$v_{S,k+L}$),

(i) Setzen derjenigen bestimmten Schaltzustandskombination ($SK_k$) zum Startabtastzeitpunkt k als ausgewählte Schaltzustandskombination ($SK_{a,k}$), bei der der Maximalwert ($v_{max}$) am kleinsten ist,

(j) Wiederholung der Schritte (a) bis (i), wobei k=k+1 ist.

3. Verfahren nach Anspruch 1, **dadurch gekennzeichnet, dass** für m ≥ 3 die Umrichterschaltung (2) zur Schaltung m Spannungsniveaus am Gleichspannungskreis (3) m-2 Teilanschlüsse (NP) aufweist und bezüglich
   Schritt (d) für jede der Schaltzustandssequenzen (SSK) zusätzlich m-2 Potentialtrajektorien ($U_{NP}$) für Potentiale an den m-2 Teilanschlüssen (NP) aus ermittelten Zustandswertesätzen ($X_{e,k}$,... ,$X_{e,k+L}$) der rotierenden elektrischen Maschine (1) und der Umrichterschaltung (2) für den Startabtastzeitpunkt k bis zum Abtastzeitpunkt k+L berechnet werden, dass bezüglich
   Schritt (e) falls die m-2 Potentialtrajektorien ($U_{NP}$) zum k-ten Abtastzeitpunkt eine vor$^g$e-gebene obere Wertebereichsgrenze ($y_{NP,max}$) überschreitet oder eine vorgegebene untere Wertebereichsgrenze ($y_{NP,min}$) unterschreitet, ein auf die obere und untere Werte$_{reichsgrenze}$ ($y_{NP,min}$ ,$y_{NP,max}$) bezogener Potentialverletzungswert ($v_{NP,k}$,...,$v_{NP,k+L}$) für den Abtastzeitpunkt k bis zu dem Abtastzeitpunkt k+L für jede Potentialtrajektorie ($U_{NP}$) berechnet wird, und dass bezüglich
   Schritt (g) für jede Schaltzustandssequenz (SSK) und für den Abtastzeitpunkt k bis zu dem Abtastzeitpunkt k+L der Maximalwert ($v_{max}$) zusätzlich aus den Potentialverletzungswerten ($v_{NP,k}$,...,$v_{NP,k+L}$) bestimmt wird.

4. Verfahren nach Anspruch 2 **dadurch gekennzeichnet, dass** für m ≥ 3 die Umrichterschaltung (2) zur Schaltung m Spannungsniveaus am Gleichspannungskreis (3) m-2 Teilanschlüsse (NP) aufweist und bezüglich
   Schritt (d) für jede der Schaltzustandssequenzen (SSK) zusätzlich m-2 Potentialtrajektorien ($U_{NP}$) für Potentiale an den m-2 Teilanschlüssen (NP) aus ermittelten Zustandswertesätzen ($X_{e,k}$,... , $X_{e,k+L}$) der rotierenden elektrischen Maschine (1) und der Umrichterschaltung (2) für den Startabtastzeitpunkt k bis zum Abtastzeitpunkt k+L berechnet werden, dass bezüglich
   Schritt (e) falls die m-2 Potentialtrajektorien ($U_{NP}$) zum k-ten Abtastzeitpunkt eine vorgegebene obere Wertebereichsgrenze ($y_{NP,max}$) überschreitet oder eine vorgegebene untere Wertebereichsgrenze ($y_{NP,min}$) unterschreitet, ein auf die obere und untere Wertebereichsgrenze ($y_{NP,min}$,$y_{NP,max}$) bezogener Potentialverletzungswert ($v_{NP,k}$,...,$v_{NP,k+L}$) für den Abtastzeitpunkt k bis zu dem Abtastzeitpunkt k+L für jede Potentialtrajektorie ($U_{NP}$) berechnet wird, dass bezüglich
   Schritt (g) für jede Schaltzustandssequenz (SSK) und für den Abtastzeitpunkt k bis zu dem Abtastzeitpunkt k+L zusätzlich die Summe ($S_{NP,v}$) aus den Potentialverletzungswerten ($v_{NP,k}$,...,$v_{NP,k+L}$) gebildet wird, und dass bezüglich
   Schritt (h) für jede Schaltzustandssequenz (SSK) der Maximalwertes ($v_{max}$) zusätzlich aus der Summe ($S_{NP,v}$) der Potentialverletzungswerte ($v_{NP,k}$,...,$v_{NP,k+L}$) gebildet wird.

5. Verfahren nach einem der Ansprüche 1 bis 4, **dadurch gekennzeichnet, dass** falls die Drehmomenttrajektorie (M) zum k-ten Abtastzeitpunkt die vorgegebene obere Wertebereichsgrenze ($y_{M,max}$) überschreitet, die Berechnung des auf die obere und untere Wertebereichsgrenze ($y_{M,min}$,$y_{M,max}$) bezogenen Drehmomentverletzungswertes ($v_{M,k}$,...,$v_{M,k+L}$) für den Abtastzeitpunkt k bis zu dem Abtastzeitpunkt k+L nach folgender Formel erfolgt

$$v_{M,k},...,v_{M,k+L} = \frac{M_{T,k},...,M_{T,k+L} - y_{M,max}}{y_{M,max} - y_{M,min}},$$

und dass
falls die Drehmomenttrajektorie (M) zum k-ten Abtastzeitpunkt die vorgegebene untere Wertebereichsgrenze ($y_{M,min}$) unterschreitet, die Berechnung des auf die obere und untere Wertebereichsgrenze ($y_{M,min}$, $y_{M,max}$) bezogenen Drehmomentverletzungswertes ($v_{M,k}$,...,$v_{M,k+L}$) für den Abtastzeitpunkt k bis zu dem Abtastzeitpunkt k+L nach folgender Formel erfolgt

$$v_{M,k},...,v_{M,k+L} = \frac{y_{M,min} - M_{T,k},...,M_{T,k+L}}{y_{M,max} - y_{M,min}},$$

wobei $M_{T,k}$,..., $M_{T,k+L}$ die Trajektorienwerte der Drehmomenttrajektorie (M) für den Abtastzeitpunkt k bis zu dem Abtastzeitpunkt k+L sind.

6. Verfahren nach einem der Ansprüche 1 bis 5, **dadurch gekennzeichnet, dass** falls die magnetische Statorfluss-trajektorie ($\phi$) zum k-ten Abtastzeitpunkt die vorgegebene obere Wertebereichsgrenze ($y_{S,max}$) überschreitet, die Berechnung des auf die obere und untere Wertebereichsgrenze ($y_{S,min}$, $y_{S,max}$) bezogenen Statorflussverletzungswertes ($v_{S,k}$,...,$v_{S,k+L}$) für den Abtastzeitpunkt k bis zu dem Abtastzeitpunkt k+L nach folgender Formel erfolgt

$$v_{S,k},...,v_{S,k+L} = \frac{\Phi_{T,k},...,\Phi_{T,k+L} - y_{S,max}}{y_{S,max} - y_{S,min}},$$

und dass
falls die magnetische Statorflusstrajektorie ($\phi$) zum k-ten Abtastzeitpunkt die vorgegebene untere Wertebereichsgrenze ($y_{S,min}$) unterschreitet, die Berechnung des auf die obere und untere Wertebereichsgrenze ($y_{S,min}$, $y_{S,max}$) bezogenen Statorflussverletzungswertes ($v_{S,k}$,..,$v_{S,k+L}$) für den Abtastzeitpunkt k bis zu dem Abtastzeitpunkt k+L nach folgender Formel erfolgt

$$v_{S,k},...,v_{S,k+L} = \frac{y_{S,min} - \Phi_{T,k},...,\Phi_{T,k+L}}{y_{S,max} - y_{S,min}},$$

wobei $\phi_{T,k}$,..., $\phi_{T,k+L}$ die Trajektorienwerte der magnetischen Statorflusstrajektorie ($\phi$) für den Abtastzeitpunkt k bis zu dem Abtastzeitpunkt k+L sind.

7. Verfahren nach einem der Ansprüche 3 oder 4, **dadurch gekennzeichnet, dass** falls die m-2 Potentialtrajektorien ($U_{NP}$) zum k-ten Abtastzeitpunkt die vorgegebene obere Wertebereichsgrenze ($y_{NP,max}$) überschreiten, die Berechnung des auf die obere und untere Wertebereichsgrenze ($y_{NP,min}$, $y_{NP,max}$) bezogenen Potentialverletzungswertes ($v_{NP,k}$,...,$v_{NP,k+L}$) für den Abtastzeitpunkt k bis zu dem Abtastzeitpunkt k+L nach folgender Formel erfolgt

$$v_{NP,k},...,v_{NP,k+L} = \frac{U_{T,k},...,U_{T,k+L} - y_{NP,max}}{y_{NP,max} - y_{NP,min}},$$

und dass
falls die m-2 Potentialtrajektorien ($U_{NP}$) zum k-ten Abtastzeitpunkt die vorgegebene untere Wertebereichsgrenze ($y_{NP,min}$) unterschreiten, die Berechnung des auf die obere und untere Wertebereichsgrenze ($y_{NP,min}$, $y_{NP,max}$) bezogenen Potentialverletzungswertes ($v_{NP,k}$,...,$v_{NP,k+L}$) für den Abtastzeitpunkt k bis zu dem Abtastzeitpunkt k+L nach folgender Formel erfolgt

$$v_{NP,k},...,v_{NP,k+L} = \frac{y_{NP,min} - U_{T,k},...,U_{T,k+L}}{y_{NP,max} - y_{NP,min}},$$

wobei $U_{T,k},...,U_{T,k+L}$ die Trajektorienwerte der m-2 Potentialtrajektorien ($U_{NP}$) für den Abtastzeitpunkt k bis zu dem Abtastzeitpunkt k+L sind.

**Claims**

1. Method for operating a rotating electrical machine (1), the rotating electrical machine being connected in terms of phase to a converter circuit (2), having a DC voltage circuit (3), for connecting m voltage levels, where m ≥ 2, having the following steps

    (a) connection of the phases (u, v, w) of the converter circuit (2) to the DC voltage circuit (3) in accordance with a selected switching state combination ($SK_{a,k}$) of switching states for power semiconductor switches in the converter circuit (2), the selection of the switching state combination ($SK_{a,k}$) takes place in the following further steps:
    (b) beginning with a starting sampling time k for a selectable number L of sampling times:

    determination of all the switching state combinations ($SK_k$, ..., $SK_{k+L}$) at each of the L sampling times, where L ≥ 1,

    (c) formation of switching state sequences (SSK) for each determined switching state combination ($SK_k$) at the starting sampling time k, each switching state sequence (SSK) being an arrangement of determined switching state combinations ($SK_k$, ..., $SK_{k+L}$) of the L sampling times next to one another in a row, said switching state combinations ($SK_k$, ..., $SK_{k+L}$) being associated with the respective switching state combination ($SK_k$) at the starting sampling time k,
    (d) for each of the switching state sequences (SSK), calculation of a torque trajectory (M) of the rotating electrical machine (1) and a magnetic stator flux trajectory ($\phi$) of the rotating electrical machine (1) from determined state value sets ($X_{e,k}$, ..., $X_{e,k+L}$) of the rotating electrical machine (1) and the converter circuit (2) for the starting sampling time k up to the sampling time k+L,
    **characterized by** the following further steps:
    (e) if the torque trajectory (M) at the k-th sampling time exceeds a predetermined upper value range limit ($y_{M,max}$) or falls below a predetermined lower value range limit ($y_{M,min}$), calculation of a torque infringement value ($v_{M,k}$,..., $v_{M,k+L}$) based on the upper and lower value range limits ($y_{M,min}$, $y_{M,max}$) for the sampling time k up to the sampling time k+L,
    (f) if the magnetic stator flux trajectory ($\phi$) at the k-th sampling time exceeds a predetermined upper value range limit ($y_{S,max}$) or falls below a predetermined lower value range limit ($y_{S,min}$), calculation of a stator flux infringement value ($v_{S,k}$, ..., $v_{S,k+L}$) based on the upper and lower value range limits ($y_{S,min}$, $y_{S,max}$) for the sampling time k up to the sampling time k+L,
    (g) for each switching state sequence (SSK) and for the sampling time k up to the sampling time k+L, determination of the maximum value ($v_{max}$) from the torque infringement values ($v_{M,k}$,..., $v_{M,k+L}$) and the stator flux infringement values ($V_{S,k}$,...,$v_{S,k+L}$),
    (h) for each switching state sequence (SSK), formation of the sum ($S_{vmax}$) of the maximum values ($v_{max}$),
    (i) setting that determined switching state combination ($SK_k$) at the starting sampling time k as the selected switching state combination ($SK_{a,k}$) with which the sum ($S_{vmax}$) of the maximum values ($v_{max}$) is at its smallest,
    (j) repetition of steps (a) to (i), where k=k+1.

2. Method for operating a rotating electrical machine (1), the rotating electrical machine being connected in terms of phase to a converter circuit (2), having a DC voltage circuit (3), for connecting m voltage levels, where m ≥ 2, having the following steps

    (a) connection of the phases (u, v, w) of the converter circuit (2) to the DC voltage circuit (3) in accordance with a selected switching state combination ($SK_{a,k}$) of switching states for power semiconductor switches in the converter circuit (2), the selection of the switching state combination ($SK_{a,k}$) takes place in the following further steps:

(b) beginning with a starting sampling time k for a selectable number L of sampling times:

determination of all the switching state combinations $(SK_k, ..., SK_{k+L})$ at each of the L sampling times, where $L \geq 1$,

(c) formation of switching state sequences (SSK) for each determined switching state combination $(SK_k)$ at the starting sampling time k, each switching state sequence (SSK) being an arrangement of determined switching state combinations $(SK_k, ..., SK_{k+L})$ of the L sampling times next to one another in a row, said switching state combinations $(SK_k, ..., SK_{k+L})$ being associated with the respective switching state combination $(SK_k)$ at the starting sampling time k,

(d) for each of the switching state sequences (SSK), calculation of a torque trajectory (M) of the rotating electrical machine (1) and a magnetic stator flux trajectory $(\phi)$ of the rotating electrical machine (1) from determined state value sets $(X_{e,k}, ..., X_{e,\,k+L})$ of the rotating electrical machine (1) and the converter circuit (2) for the starting sampling time k up to the sampling time k+L,

**characterized by** the following further steps:

(e) if the torque trajectory (M) at the k-th sampling time exceeds a predetermined upper value range limit $(y_{M,max})$ or falls below a predetermined lower value range limit $(y_{M,min})$, calculation of a torque infringement value $(v_{M,k},..., v_{M,k+L})$ based on the upper and lower value range limits $(y_{M,min}, y_{M,max})$ for the sampling time k up to the sampling time k+L,

(f) if the magnetic stator flux trajectory $(\phi)$ at the k-th sampling time exceeds a predetermined upper value range limit $(y_{S,max})$ or falls below a predetermined lower value range limit $(y_{S,min})$, calculation of a stator flux infringement value $(v_{S,k},...,v_{S,k+L})$ based on the upper and lower value range limits $(y_{S,min}, y_{S,max})$ for the sampling time k up to the sampling time k+L,

(g) for each switching state sequence (SSK) and for the sampling time k up to the sampling time k+L, formation of the sum $(S_{M,v})$ of the torque infringement values $(v_{M,k},..., v_{M,k+L})$ and formation of the sum $(S_{S,v})$ of the stator flux infringement values $(v_{S,k},...,v_{S,k+L})$,

(h) for each switching state sequence (SSK), formation of the maximum value $(v_{max})$ from the sum $(S_{M,v})$ of the torque infringement values $(v_{M,k},...,v_{M,k+L})$ and the sum $(S_{S,v})$ of the stator flux infringement values $(v_{S,k},...,v_{S,k+L})$,

(i) setting that determined switching state combination $(SK_k)$ at the starting sampling time k as the selected switching state combination $(SK_{a,k})$ with which the maximum value $(v_{max})$ is at its smallest,

(j) repetition of steps (a) to (i), where k=k+1.

3. Method according to Claim 1, **characterized in that**, for $m \geq 3$, the converter circuit (2) for connecting m voltage levels has m-2 subconnections (NP) at the DC voltage circuit (3) and, with respect to step (d), for each of the switching state sequences (SSK), in addition m-2 potential trajectories $(U_{NP})$ for potentials at the m-2 subconnections (NP) are calculated from determined state value sets $(X_{e,k}, ..., X_{e,k+L})$ of the rotating electrical machine (1) and the converter circuit (2) for the starting sampling time k up to the sampling time k+L, **in that**, with respect to step (e), if the m-2 potential trajectories $(U_{NP})$ at the k-th sampling time exceed a predetermined upper value range limit $(y_{NP,max})$ or fall below a predetermined lower value range limit $(y_{NP,min})$, a potential infringement value $(v_{NP,k},...,v_{NP,k+L})$ based on the upper and lower value range limits $(y_{NP,min}, y_{NP,max})$ for the sampling time k up to the sampling time k+L is calculated for each potential trajectory $(U_{NP})$, and, with respect to step (g), for each switching state sequence (SSK) and for the sampling time k up to the sampling time k+L, the maximum value $(v_{max})$ is then additionally determined from the potential infringement values $(V_{NP,k},...,v_{NP,k+L})$.

4. Method according to Claim 2, **characterized in that**, for $m \geq 3$, the converter circuit (2) for connecting m voltage levels has m-2 subconnections (NP) at the DC voltage circuit (3) and, with respect to step (d), for each of the switching state sequences (SSK), in addition m-2 potential trajectories $(U_{NP})$ for potentials at the m-2 subconnections (NP) are calculated from determined state value sets $(X_{e,k}, ..., X_{e,k+L})$ of the rotating electrical machine (1) and the converter circuit (2) for the starting sampling time k up to the sampling time k+L, **in that**, with respect to step (e), if the m-2 potential trajectories $(U_{NP})$ at the k-th sampling time exceed a predetermined upper value range limit $(y_{NP,max})$ or fall below a predetermined lower value range limit $(y_{NP,min})$, a potential infringement value $(v_{NP,k},...,v_{NP,k+L})$ based on the upper and lower value range limits $(y_{NP,min}, y_{NP,max})$ for the sampling time k up to the sampling time k+L is calculated for each potential trajectory $(U_{NP})$, **in that**, with respect to step (g), for each switching state sequence (SSK) and for the sampling time k up to the sampling time k+L, in addition the sum $(S_{NP,v})$ of the potential infringement values $(v_{NP,k},...,v_{NP,k+L})$ is formed, and **in that**, with respect to step (h), for each switching state sequence (SSK), the maximum value $(v_{max})$ is additionally formed from the sum $(S_{NP,v})$ of the potential infringement values $(V_{NP,k}, ...,v_{NP,k+L})$.

5. Method according to one of Claims 1 to 4, **characterized in that**, if the torque trajectory (M) at the k-th sampling time exceeds the predetermined upper value range limit ($y_{M,max}$), the calculation of the torque infringement value ($v_{M,k},..., v_{M,k+L}$) based on the upper and lower value range limits ($y_{M,min}, y_{M,max}$) based on the upper and lower value range limits ($y_{NP,min}, y_{NP,max}$) for the sampling time k up to the sampling time k+L is done in accordance with the following formula

$$v_{M,k},..., v_{M,k+L} = \frac{M_{T,k},..., M_{T,k+L} - y_{M,max}}{y_{M,max} - y_{M,min}},$$

and **in that**,
if the torque trajectory (M) at the k-th sampling time falls below the predetermined lower value range limit ($y_{M,min}$), the calculation of the torque infringement value ($v_{M,k},..., v_{M,k+L}$) based on the upper and lower value range limits ($y_{M,min}, y_{M,max}$) for the sampling time k up to the sampling time k+L is done in accordance with the following formula

$$v_{M,k},..., v_{M,k+L} = \frac{y_{M,min} - M_{T,k},..., M_{T,k+L}}{y_{M,max} - y_{M,min}},$$

where $M_{T,k},..., M_{T,k+L}$ are the trajectory values of the torque trajectory (M) for the sampling time k up to the sampling time k+L.

6. Method according to one of Claims 1 to 5, **characterized in that**, if the magnetic stator flux trajectory ($\phi$) at the k-th sampling time exceeds the predetermined upper value range limit ($y_{S,max}$), the calculation of the stator flux infringement value ($v_{S,k},..., v_{S,k+L}$) based on the upper and lower value range limits ($y_{S,min}, y_{S,max}$) for the sampling time k up to the sampling time k+L is done in accordance with the following formula

$$v_{S,k},..., v_{S,k+L} = \frac{\Phi_{T,k},..., \Phi_{T,k+L} - y_{S,max}}{y_{S,max} - y_{S,min}},$$

and **in that**,
if the magnetic stator flux trajectory ($\phi$) at the k-th sampling time falls below the predetermined lower value range limit ($y_{S,min}$), the calculation of the stator flux infringement value ($v_{S,k},..., v_{S,k+L}$) based on the upper and lower value range limits ($y_{S,min}, y_{S,max}$) for the sampling time k up to the sampling time k+L is done in accordance with the following formula

$$v_{S,k},..., v_{S,k+L} = \frac{y_{S,min} - \Phi_{T,k},..., \Phi_{T,k+L}}{y_{S,max} - y_{S,min}},$$

where $\phi_{T,k},..., \phi_{T,k+L}$ are the trajectory values of the magnetic stator flux trajectory ($\phi$) for the sampling time k up to the sampling time k+L.

7. Method according to either of Claims 3 or 4, **characterized in that**, if the m-2 potential trajectories ($U_{NP}$) at the k-th sampling time exceed the predetermined upper value range limit ($y_{NP,max}$), the calculation of the potential infringement value ($v_{NP,k},..., v_{NP,k+L}$) based on the upper and lower value range limits ($y_{NP,min}, y_{NP,max}$) for the sampling time k up to the sampling time k+L is done in accordance with the following formula

$$v_{NP,k}, ..., v_{NP,k+L} = \frac{U_{T,k}, ..., U_{T,k+L} - y_{NP,max}}{y_{NP,max} - y_{NP,min}},$$

and **in that**,

if the m-2 potential trajectories ($U_{NP}$) at the k-th sampling time fall below the predetermined lower value range limit ($y_{NP,min}$), the calculation of the potential infringement value ($v_{NP,k}, ..., v_{NP,k+L}$) based on the upper and lower value range limits ($y_{NP,min}$, $y_{NP,max}$) for the sampling time k up to the sampling time k+L is done in accordance with the following formula

$$v_{NP,k}, ..., v_{NP,k+L} = \frac{y_{NP,min} - U_{T,k}, ..., U_{T,k+L}}{y_{NP,max} - y_{NP,min}},$$

where $U_{T,k}, ..., U_{T,k+L}$ are the trajectory values of the m-2 potential trajectories ($U_{NP}$) for the sampling time k up to the sampling time k+L.

**Revendications**

1.  Procédé pour faire fonctionner une machine électrique rotative (1), la machine électrique rotative étant reliée en concordance de phase avec un circuit convertisseur (2) présentant un circuit de tension continue (3) et destiné à commuter m niveaux de tension, avec m ≥ 2,
    comprenant les étapes suivantes :

    (a) connexion des phases (u, v, w) du circuit convertisseur (2) avec le circuit de tension continue (3) selon une combinaison d'états de commutation ($SK_{a,k}$) sélectionnée d'états de commutation des commutateurs semiconducteurs de puissance du circuit convertisseur (2), la sélection de la combinaison d'états de commutation ($SK_{a,k}$) s'effectuant dans les étapes supplémentaires suivantes :
    (b) en commençant par un instant d'échantillonnage de départ k pour un nombre L sélectionnable d'instants d'échantillonnage :

    détermination de toutes les combinaisons d'états de commutation ($SK_k$, ..., $SK_{k+L}$) pour chacun des L instants d'échantillonnage, avec L ≥ 1,

    (c) formation de séquences d'état de commutation (SSK) pour chaque combinaison d'états de commutation ($SK_k$) déterminée à l'instant d'échantillonnage de départ k, chaque séquence d'état de commutation (SSK) étant une juxtaposition de combinaisons d'états de commutation ($SK_k$, ..., $SK_{k+L}$) déterminées des L instants d'échantillonnage, associées à la combinaison d'états de commutation ($SK_k$) correspondante à l'instant d'échantillonnage de départ k,
    (d) pour chacune des séquences d'état de commutation (SSK), calcul de la trajectoire de couple (M) de la machine électrique rotative (1) et d'une trajectoire de flux de stator magnétique (φ) de la machine électrique rotative (1) à partir de jeux de valeurs d'état ($X_{e, k}$, ..., $X_{e, k+L}$) déterminés de la machine électrique rotative (1) et du circuit convertisseur (2) pour l'instant d'échantillonnage de départ k jusqu'à l'instant d'échantillonnage k+L, **caractérisé par** les étapes supplémentaires suivantes :
    (e) si, au k-ième instant d'échantillonnage, la trajectoire de couple (M) devient supérieure à une limite de plage de valeurs haute ($y_{M,max}$) prédéfinie ou devient inférieure à une limite de plage de valeurs basse ($y_{M,min}$) prédéfinie, calcul d'une valeur de violation du couple ($V_{M,k}$, ..., $V_{M,k+L}$) en rapport avec les limites supérieure et inférieure de plage de valeurs ($y_{M,min}$, $y_{M,max}$) pour l'instant d'échantillonnage k jusqu'à l'instant d'échantillonnage k+L,
    (f) si, au k-ième instant d'échantillonnage, la trajectoire de flux de stator magnétique (φ) devient supérieure à une limite de plage de valeurs haute ($y_{S,max}$) prédéfinie ou devient inférieure à une limite de plage de valeurs basse ($y_{S,min}$) prédéfinie, calcul d'une valeur de violation du flux de stator ($V_{S,k}$, ..., $V_{S,k+L}$) en rapport avec les limites supérieure et inférieure de plage de valeurs ($y_{S,min}$, $y_{S,max}$) pour l'instant d'échantillonnage k jusqu'à l'instant d'échantillonnage k+L,

(g) pour chaque séquence d'état de commutation (SSK) et pour l'instant d'échantillonnage k jusqu'à l'instant d'échantillonnage k+L, détermination de la valeur maximale ($v_{max}$) parmi les valeurs de violation du couple ($V_{M,k}$, ..., $V_{M,k+L}$) et les valeurs de violation du flux de stator ($V_{S,k}$, ..., $V_{S,k+L}$),

(h) pour chaque séquence d'état de commutation (SSK), formation de la somme ($S_{vmax}$) des valeurs maximales ($v_{max}$),

(i) définition de la combinaison d'états de commutation ($SK_k$) déterminée à l'instant d'échantillonnage de départ k avec laquelle la somme ($S_{vmax}$) des valeurs maximales ($v_{max}$) est la plus petite comme étant la combinaison d'états de commutation ($SK_{a,k}$) sélectionnée,

(j) répétition des étapes (a) à (i), avec k = k+1.

2. Procédé pour faire fonctionner une machine électrique rotative (1), la machine électrique rotative étant reliée en concordance de phase avec un circuit convertisseur (2) présentant un circuit de tension continue (3) et destiné à commuter m niveaux de tension, avec m ≥ 2,

comprenant les étapes suivantes :

(a) connexion des phases (u, v, w) du circuit convertisseur (2) avec le circuit de tension continue (3) selon une combinaison d'états de commutation ($SK_{a,k}$) sélectionnée d'états de commutation des commutateurs semiconducteurs de puissance du circuit convertisseur (2), la sélection de la combinaison d'états de commutation ($SK_{a,k}$) s'effectuant dans les étapes supplémentaires suivantes :

(b) en commençant par un instant d'échantillonnage de départ k pour un nombre L sélectionnable d'instants d'échantillonnage :

détermination de toutes les combinaisons d'états de commutation ($SK_k$, ..., $SK_{k+L}$) pour chacun des L instants d'échantillonnage, avec L ≥ 1,

(c) formation de séquences d'état de commutation (SSK) pour chaque combinaison d'états de commutation ($SK_k$) déterminée à l'instant d'échantillonnage de départ k, chaque séquence d'état de commutation (SSK) étant une juxtaposition de combinaisons d'états de commutation ($SK_k$, ..., $SK_{k+L}$) déterminées des L instants d'échantillonnage, associées à la combinaison d'états de commutation ($SK_k$) correspondante à l'instant d'échantillonnage de départ k,

(d) pour chacune des séquences d'état de commutation (SSK), calcul de la trajectoire de couple (M) de la machine électrique rotative (1) et d'une trajectoire de flux de stator magnétique (φ) de la machine électrique rotative (1) à partir de jeux de valeurs d'état ($X_{e, k}$, ..., $X_{e, k+L}$) déterminés de la machine électrique rotative (1) et du circuit convertisseur (2) pour l'instant d'échantillonnage de départ k jusqu'à l'instant d'échantillonnage k+L, **caractérisé par** les étapes supplémentaires suivantes :

(e) si, au k-ième instant d'échantillonnage, la trajectoire de couple (M) devient supérieure à une limite de plage de valeurs haute ($y_{M,max}$) prédéfinie ou devient inférieure à une limite de plage de valeurs basse ($y_{M,min}$) prédéfinie, calcul d'une valeur de violation du couple ($V_{M,k}$, ..., $V_{M,k+L}$) en rapport avec les limites supérieure et inférieure de plage de valeurs ($y_{M,min}$, $y_{M,max}$) pour l'instant d'échantillonnage k jusqu'à l'instant d'échantillonnage k+L,

(f) si, au k-ième instant d'échantillonnage, la trajectoire de flux de stator magnétique (φ) devient supérieure à une limite de plage de valeurs haute ($y_{S,max}$) prédéfinie ou devient inférieure à une limite de plage de valeurs basse ($y_{S,min}$) prédéfinie, calcul d'une valeur de violation du flux de stator ($V_{S,k}$, ..., $V_{S,k+L}$) en rapport avec les limites supérieure et inférieure de plage de valeurs ($y_{S,min}$, $y_{S,max}$) pour l'instant d'échantillonnage k jusqu'à l'instant d'échantillonnage k+L,

(g) pour chaque séquence d'état de commutation (SSK) et pour l'instant d'échantillonnage k jusqu'à l'instant d'échantillonnage k+L, formation de la somme ($S_{M,V}$) des valeurs de violation du couple ($V_{M,k}$, ..., $V_{M,k+L}$) et formation de la somme ($S_{S,V}$) des valeurs de violation du flux de stator ($V_{S,k}$, ..., $V_{S,k+L}$),

(h) pour chaque séquence d'état de commutation (SSK), formation de la valeur maximale ($v_{max}$) de la somme ($S_{M,V}$) des valeurs de violation du couple ($V_{M,k}$, ..., $V_{M,k+L}$) et de la somme ($S_{S,V}$) des valeurs de violation du flux de stator ($V_{S,k}$, ..., $V_{S,k+L}$),

(i) définition de la combinaison d'états de commutation ($SK_k$) déterminée à l'instant d'échantillonnage de départ k avec laquelle la valeur maximale ($v_{max}$) est la plus petite comme étant la combinaison d'états de commutation ($SK_{a,k}$) sélectionnée,

(j) répétition des étapes (a) à (i), avec k = k+1.

3. Procédé selon la revendication 1, **caractérisé en ce que** pour m ≥ 3, le circuit convertisseur (2) destiné à commuter m niveaux de tension présente m-2 bornes partielles (NP) sur le circuit de tension continue (3) et, concernant l'étape (d), pour chacune des séquences d'état de commutation (SSK), m-2 trajectoires de potentiel (U$_{NP}$) sont calculées en plus pour les potentiels aux m-2 bornes partielles (NP) à partir des jeux de valeurs d'état (X$_{e, k}$, ..., X$_{e, k+L}$) déterminés de la machine électrique rotative (1) et du circuit convertisseur (2) pour l'instant d'échantillonnage de départ k jusqu'à l'instant d'échantillonnage k+L, **en ce que** concernant l'étape (e), si les m-2 trajectoires de potentiel (U$_{NP}$) au k-ième instant d'échantillonnage deviennent supérieures à une limite de plage de valeurs haute (Y$_{NP,max}$) prédéfinie ou deviennent inférieures à une limite de plage de valeurs basse (y$_{NP,min}$) prédéfinie, une valeur de violation du potentiel (V$_{NP,k}$, ..., V$_{NP,k+L}$) en rapport avec les limites supérieure et inférieure de plage de valeurs (y$_{NP,min}$, y$_{NP,max}$) est calculée pour l'instant d'échantillonnage k jusqu'à l'instant d'échantillonnage k+L pour chaque trajectoire de potentiel (U$_{NP}$), et **en ce que** concernant l'étape (g), pour chaque séquence d'état de commutation (SSK) et pour l'instant d'échantillonnage k jusqu'à l'instant d'échantillonnage k+L, la valeur maximale (v$_{max}$) des valeurs de violation du potentiel (V$_{NP,k}$, ..., V$_{NP,k+L}$) est en plus déterminée.

4. Procédé selon la revendication 2, **caractérisé en ce que** pour m $\geq$ 3, le circuit convertisseur (2) destiné à commuter m niveaux de tension présente m-2 bornes partielles (NP) sur le circuit de tension continue (3) et, concernant l'étape (d), pour chacune des séquences d'état de commutation (SSK), m-2 trajectoires de potentiel (U$_{NP}$) sont calculées en plus pour les potentiels aux m-2 bornes partielles (NP) à partir des jeux de valeurs d'état (X$_{e, k}$, ..., X$_{e, k+L}$) déterminés de la machine électrique rotative (1) et du circuit convertisseur (2) pour l'instant d'échantillonnage de départ k jusqu'à l'instant d'échantillonnage k+L, **en ce que** concernant l'étape (e), si les m-2 trajectoires de potentiel (U$_{NP}$) au k-ième instant d'échantillonnage deviennent supérieures à une limite de plage de valeurs haute (Y$_{NP,max}$) prédéfinie ou deviennent inférieures à une limite de plage de valeurs basse (y$_{NP,min}$) prédéfinie, une valeur de violation du potentiel (V$_{NP,k}$, ..., V$_{NP,k+L}$) en rapport avec les limites supérieure et inférieure de plage de valeurs (y$_{NP,min}$, y$_{NP,max}$) est calculée pour l'instant d'échantillonnage k jusqu'à l'instant d'échantillonnage k+L pour chaque trajectoire de potentiel (U$_{NP}$), **en ce que** concernant l'étape (g), pour chaque séquence d'état de commutation (SSK) et pour l'instant d'échantillonnage k jusqu'à l'instant d'échantillonnage k+L, la somme (S$_{NP,V}$) des valeurs de violation du potentiel (V$_{NP,k}$, ..., V$_{NP,k+L}$) est en plus formée, et **en ce que** concernant l'étape (h), pour chaque séquence d'état de commutation (SSK), la valeur maximale (v$_{max}$) est en plus formée à partir de la somme (S$_{NP,V}$) des valeurs de violation du potentiel (V$_{NP,k}$, ..., V$_{NP,k+L}$).

5. Procédé selon l'une des revendications 1 à 4, **caractérisé en ce que** dans le cas où la trajectoire de couple (M), au k-ième instant d'échantillonnage, devient supérieure à la limite de plage de valeurs haute (y$_{M,max}$) prédéfinie, le calcul de la valeur de violation du couple (V$_{M,k}$, ..., V$_{M,k+L}$) en rapport avec les limites supérieure et inférieure de plage de valeurs (y$_{M,min}$, y$_{M,max}$) pour l'instant d'échantillonnage k jusqu' à l'instant d'échantillonnage k+L s'effectue conformément à la formule suivante

$$v_{M,k}, ..., v_{M,k+L} = \frac{M_{T,k}, ..., M_{T,k+L} - y_{M,max}}{y_{M,max} - y_{M,min}},$$

et **en ce que**
dans le cas où la trajectoire de couple (M), au k-ième instant d'échantillonnage, devient inférieure à la limite de plage de valeurs basse (y$_{M,min}$) prédéfinie, le calcul de la valeur de violation du couple (V$_{M,k}$, ..., V$_{M,k+L}$) en rapport avec les limites supérieure et inférieure de plage de valeurs (y$_{M,min}$, y$_{M,max}$) pour l'instant d'échantillonnage k jusqu'à l'instant d'échantillonnage k+L s'effectue conformément à la formule suivante

$$v_{M,k}, ..., v_{M,k+L} = \frac{y_{M,min} - M_{T,k}, ..., M_{T,k+L}}{y_{M,max} - y_{M,min}},$$

M$_{T,k}$, ..., M$_{T,k+L}$ désignant ici les valeurs de trajectoire de la trajectoire de couple (M) pour l'instant d'échantillonnage k jusqu'à l'instant d'échantillonnage k+L.

6. Procédé selon l'une des revendications 1 à 5, **caractérisé en ce que** dans le cas où la trajectoire de flux de stator magnétique ($\phi$), au k-ième instant d'échantillonnage, devient supérieure à la limite de plage de valeurs haute (y$_{S,max}$) prédéfinie, le calcul de la valeur de violation du flux de stator (V$_{S,k}$, ..., V$_{S,k+L}$) en rapport avec les limites supérieure et inférieure de plage de valeurs (y$_{S,min}$, y$_{S,max}$) pour l'instant d'échantillonnage k jusqu'à l'instant d'échantillonnage k+L s'effectue conformément à la formule suivante

$$V_{S,k}, ..., V_{S,k+L} = \frac{\bar{\Phi}_{T,k}, ..., \bar{\Phi}_{T,k+L} - y_{S,max}}{y_{S,max} - y_{S,min}},$$

et **en ce que**
dans le cas où la trajectoire de flux de stator magnétique ($\phi$), au k-ième instant d'échantillonnage, devient inférieure à la limite de plage de valeurs basse ($y_{S,min}$) prédéfinie, le calcul de la valeur de violation du flux de stator ($V_{S,k}$, ..., $V_{S,k+L}$) en rapport avec les limites supérieure et inférieure de plage de valeurs ($y_{S,min}$, $y_{S,max}$) pour l'instant d'échantillonnage k jusqu'à l'instant d'échantillonnage k+L s'effectue conformément à la formule suivante

$$V_{S,k}, ..., V_{S,k+L} = \frac{y_{S,min} - \Phi_{T,k}, ..., \Phi_{T,k+L}}{y_{S,max} - y_{S,min}},$$

$\phi_{T,k}$, ..., $\phi_{T,k+L}$ désignant ici les valeurs de trajectoire de la trajectoire de flux de stator magnétique ($\phi$) pour l'instant d'échantillonnage k jusqu'à l'instant d'échantillonnage k+L.

7. Procédé selon l'une des revendications 3 ou 4, **caractérisé en ce que** dans le cas où les m-2 trajectoires de potentiel ($U_{NP}$), au k-ième instant d'échantillonnage, deviennent supérieures à la limite de plage de valeurs haute ($y_{NP,max}$) prédéfinie, le calcul de la valeur de violation du potentiel ($V_{NP,k}$, ..., $V_{NP,k+L}$) en rapport avec les limites supérieure et inférieure de plage de valeurs ($y_{NP,min}$, $y_{NP,max}$) pour l'instant d'échantillonnage k jusqu'à l'instant d'échantillonnage k+L s'effectue conformément à la formule suivante

$$V_{NP,k}, ..., V_{NP,k+L} = \frac{U_{T,k}, ..., U_{T,k+L} - y_{NP,max}}{y_{NP,max} - y_{NP,min}},$$

et **en ce que**
dans le cas où les m-2 trajectoires de potentiel ($U_{NP}$), au k-ième instant d'échantillonnage, deviennent inférieures à la limite de plage de valeurs basse ($y_{NP,min}$) prédéfinie, le calcul de la valeur de violation du potentiel ($V_{NP,k}$, ..., $V_{NP,k+L}$) en rapport avec les limites supérieure et inférieure de plage de valeurs ($y_{NP,min}$, $y_{NP,max}$) pour l'instant d'échantillonnage k jusqu'à l'instant d'échantillonnage k+L s'effectue conformément à la formule suivante

$$V_{NP,k}, ..., V_{NP,k+L} = \frac{y_{NP,min} - U_{T,k}, ..., U_{T,k+L}}{y_{NP,max} - y_{NP,min}},$$

$U_{T,k}$, ..., $U_{T,k+L}$ désignant ici les valeurs de trajectoire des m-2 trajectoires de potentiel ($U_{NP}$) pour l'instant d'échantillonnage k jusqu'à l'instant d'échantillonnage k+L.

Fig. 1

**Fig. 2**

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1670135 A1